# FASCICULE DE BREVET EUROPEEN

(11) **EP 3 367 184 B1**
(45) Date de publication et mention de la délivrance du brevet: **29.07.2020**
(21) Numéro de dépôt: 18159045.6
(22) Date de dépôt: 28.02.2018
(51) Int. Cl.: G05B 15/02

(54) **PROCÉDÉ DE CONFIGURATION D'UN CAPTEUR DOMOTIQUE ET CAPTEUR DOMOTIQUE METTANT EN OEUVRE UN TEL PROCÉDÉ**
KONFIGURATIONSVERFAHREN EINES HAUSTECHNIKSENSORS, UND HAUSTECHNIKSENSOR, BEI DEM DIESES VERFAHREN UMGESETZT WIRD
METHOD FOR CONFIGURING A HOME-AUTOMATION SENSOR AND HOME-AUTOMATION SENSOR IMPLEMENTING SUCH A METHOD

(30) Priorité: 28.02.2017 FR 1751651
(43) Date de publication de la demande: 29.08.2018
(73) Titulaire: SOMFY ACTIVITES SA, 74300 Cluses (FR)
(72) Inventeur: PARTAKELIDIS, Philippe, 74250 Viuz en Sallaz (FR); DESBIOLLES, Arnaud, 74930 Pers-Jussy (FR); ESMAN, Christophe, 74130 Mont-Saxonnex (FR); AUGUSTIN, Barbara, 74800 Saint Pierre en Faucigny (FR)
(74) Mandataire: Novaimo

(56) Documents cités:
- US-A1- 2016 284 206

## Description

La présente invention concerne un procédé de configuration d'un capteur domotique. L'invention concerne aussi un procédé de fonctionnement d'un tel capteur domotique. L'invention concerne un produit programme comprenant des instructions de code de programme de mise en oeuvre d'un tel procédé de configuration et/ou de fonctionnement. L'invention concerne un support d'enregistrement comprenant un tel produit programme. L'invention concerne aussi un capteur domotique mettant en oeuvre un tel procédé de configuration et/ou de fonctionnement. L'invention concerne enfin une installation domotique comprenant un tel capteur domotique.

Les capteurs domotiques permettent de mesurer ou de détecter des grandeurs physiques diverses, comme notamment des grandeurs physiques caractérisant l'environnement (par exemple température, vent, humidité, ensoleillement, présence/concentration de gaz/polluants). Ces grandeurs peuvent concerner l'environnement intérieur d'un bâtiment ou l'environnement extérieur du bâtiment. Les grandeurs physiques peuvent aussi être relatives à la présence de personnes ou d'animaux à l'intérieur du bâtiment et/ou à l'environnement extérieur du bâtiment. Les grandeurs physiques peuvent aussi être relatives à l'état d'un ou plusieurs équipements domotiques.

Les capteurs domotiques peuvent être classés en deux catégories selon la nature des données qu'ils émettent.

Une première catégorie regroupe les capteurs domotiques qui incluent un automatisme, c'est-à-dire qu'ils incluent une logique de traitement d'une grandeur physique qu'ils ont mesurée ou qu'ils ont détectée. Cette logique de traitement ou cet automatisme permet de générer un ordre de commande d'un équipement domotique en conséquence de la valeur de la grandeur physique qu'ils ont mesurée ou qu'ils ont détectée. Par exemple, de manière simple, un ordre de commande d'un équipement domotique peut être généré lorsque la valeur mesurée ou détectée de la grandeur physique dépasse un seuil. Cet ordre de commande est inclus dans un signal qui sera émis par le capteur domotique.

Une deuxième catégorie regroupe les capteurs domotiques qui n'incluent pas d'automatisme. Dans ce cas, les capteurs domotiques génèrent un signal contenant la valeur de la grandeur physique qu'ils ont mesurée ou qu'ils ont détectée. Ce signal sera émis par le capteur domotique.

Dans les deux cas, les signaux sont émis pour être traités par des équipements domotiques les recevant. La transmission des signaux peut être directe, vers un équipement domotique, notamment muni d'un actionneur, capable de mettre en oeuvre une commande de l'équipement domotique, ou passer par l'intermédiaire d'un nœud de communication, comme une télécommande ou une unité centrale de commande.

De la même manière que les capteurs domotiques, certains équipements domotiques incluent un automatisme, c'est-à-dire qu'ils incluent une logique de traitement d'une grandeur physique reçue et sont donc capables de traiter eux-mêmes l'information de grandeur physique. D'autres n'incluent pas d'automatisme. Ils ne peuvent pas traiter eux-mêmes l'information de grandeur physique et ils doivent donc recevoir des ordres de commandes fournis par un automatisme compris dans une autre entité de l'installation, telle qu'un capteur domotique ou une télécommande. Selon la nature des équipements domotiques composant une installation domotique, c'est-à-dire incluant ou non un automatisme, il est nécessaire d'utiliser des capteurs de première catégorie ou des capteurs de deuxième catégorie dans l'installation domotique.

En pratique, un utilisateur acquiert d'abord une installation domotique basique nécessitant un ou plusieurs capteurs de première catégorie, puis après un certain temps, il acquiert des équipements domotiques complémentaires pour bénéficier de plus en plus de fonctions. Son installation domotique devient plus complexe et nécessite alors un ou plusieurs capteurs de deuxième catégorie. L'utilisateur est alors contraint d'acquérir ce ou ces capteurs de deuxième catégorie pour bénéficier de toutes les fonctionnalités de son installation. Le ou les capteurs de première catégorie sont alors la plupart du temps plus nécessaires. Ceci pose des problèmes de coût, d'installation et de configuration.

US2016/0284206 A1 décrit un procédé de configuration d'un système domotique.

Le but de l'invention est de fournir un procédé de configuration d'un capteur domotique remédiant aux inconvénients ci-dessus et améliorant les procédés connus. En particulier, l'invention propose un procédé de configuration d'un capteur domotique et un capteur domotique permettant d'éviter le remplacement du capteur domotique lors de l'évolution d'une installation domotique intégrant un tel capteur.

Selon l'invention, le procédé de configuration d'un capteur domotique comprend :
- une étape de sélection d'au moins un mode de fonctionnement du capteur domotique parmi au moins un premier mode de fonctionnement du capteur domotique dans lequel le capteur domotique émet un premier ordre de commande déterminé sur la base d'une première grandeur physique mesurée ou détectée et au moins un deuxième mode de fonctionnement du capteur domotique dans lequel le capteur domotique émet un premier signal représentatif de la première grandeur physique mesurée ou détectée, et
- une étape d'activation de l'au moins un mode de fonctionnement sélectionné lors de l'étape précédente.

L'étape de sélection peut être déclenchée par une action d'un utilisateur sur le capteur domotique, notamment sur une interface homme-machine comme un bouton ou une touche ou un potentiomètre du capteur domotique, et/ou l'étape d'activation peut être déclenchée par une action d'un utilisateur sur le capteur domotique, notamment sur une interface homme-machine comme un bouton ou une touche ou un potentiomètre du capteur domotique.

L'étape de sélection peut être déclenchée par la réception d'un signal de configuration par le capteur domotique et/ou l'étape d'activation peut être déclenchée par la réception d'un signal de configuration par le capteur domotique.

Le procédé peut comprendre une étape d'appairage du capteur domotique à au moins un équipement domotique et l'étape de sélection peut être déclenchée automatiquement selon la nature de l'au moins un équipement domotique appairé et/ou l'étape d'activation peut être déclenchée automatiquement selon la nature de l'au moins un équipement domotique appairé.

Le premier mode de fonctionnement du capteur domotique et le deuxième mode de fonctionnement du capteur domotique peuvent être exclusifs l'un de l'autre.

L'au moins un mode de fonctionnement sélectionné peut en outre être tel que le capteur domotique émet un deuxième ordre de commande déterminé sur la base d'une deuxième grandeur physique mesurée ou détectée, la deuxième grandeur physique étant distincte de la première grandeur physique, ou l'au moins un mode de fonctionnement sélectionné peut en outre être tel que le capteur domotique émet un deuxième signal représentatif de la deuxième grandeur physique mesurée ou détectée, la deuxième grandeur physique étant distincte de la première grandeur physique.

Selon l'invention, le procédé de fonctionnement d'un capteur domotique comprend :
- une étape de configuration mettant en oeuvre le procédé de configuration défini précédemment,
- une étape de mesure ou de détection d'une première grandeur physique,
- une étape d'émission d'un premier signal représentatif de la première grandeur physique mesurée ou détectée lors de l'étape précédente et/ou une étape d'émission d'un premier ordre de commande sur la base de la première grandeur physique mesurée ou détectée lors de l'étape précédente.

Selon l'invention, un capteur domotique comprend des éléments matériels et/ou logiciels mettant en œuvre le procédé défini précédemment, notamment des éléments matériels et/ou logiciels conçus pour mettre en œuvre le procédé défini précédemment.

Selon l'invention, une installation domotique comprend au moins un capteur domotique défini précédemment et au moins un actionneur domotique ou au moins un dispositif d'alarme domotique.

Selon l'invention, un support d'enregistrement de données, lisible par un calculateur, sur lequel est enregistré un programme informatique comprend des instructions de code de programme de mise en œuvre du procédé défini précédemment.

Selon l'invention, un produit programme d'ordinateur téléchargeable depuis un réseau de communication et/ou enregistré sur un support d'enregistrement de données lisible par un calculateur et/ou exécutable par un calculateur, comprend des instructions de code de programme de mise en œuvre du procédé défini précédemment, lorsque le programme est exécuté par un calculateur.

L'invention concerne aussi un signal d'un support de données, portant le produit programme d'ordinateur défini précédemment.

Ces objets, caractéristiques et avantages de la présente invention sont exposés en détail dans la description suivante d'un mode d'exécution particulier fait à titre non-limitatif en relation avec les figures jointes parmi lesquelles :
La figure 1 est une vue schématique d'une installation domotique selon un mode de réalisation.
La figure 2 est un ordinogramme d'un mode d'exécution d'un procédé de configuration d'un capteur domotique selon un mode d'exécution.

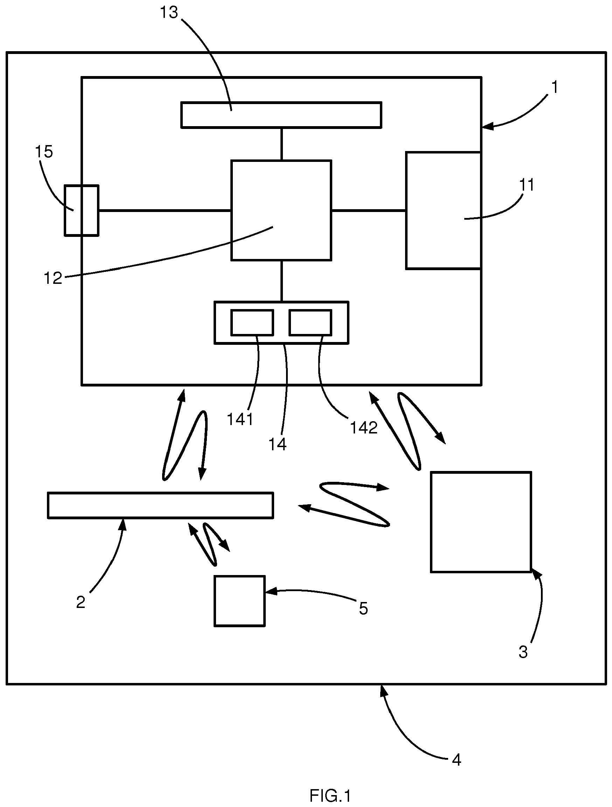

Un mode de réalisation d'une installation domotique 4 est décrit ci-après en référence à la figure 1. L'installation équipe un bâtiment (non représenté).

L'installation domotique 4 comprend :
- un capteur domotique 1,
- au moins un actionneur domotique 2 ou au moins un dispositif d'alarme, et éventuellement,
- une unité centrale de commande 3, et
- une télécommande 5.

L'au moins un actionneur peut être un actionneur de manœuvre d'un produit mobile de fermeture, d'occultation, de protection solaire ou d'écran, comme notamment un volet roulant, un store banne, un store vénitien, une porte, un portail, une grille, une fenêtre ou une trappe. L'actionneur peut aussi être un actionneur de commande d'une charge électrique, comme notamment un éclairage, un chauffage, un climatiseur, un dispositif de ventilation.

L'au moins un actionneur domotique 2 ou l'au moins un dispositif d'alarme est appairé au capteur domotique. Ainsi, le capteur domotique peut communiquer avec l'au moins un actionneur domotique 2 ou l'au moins un dispositif d'alarme. La communication peut être unidirectionnelle depuis le capteur domotique, ou bidirectionnelle. La communication peut être filaire ou sans fil, notamment par ondes électromagnétiques, par exemple par ondes radioélectriques.

Le capteur domotique peut être appairé à l'unité centrale de commande 3. Ainsi, le capteur domotique peut communiquer avec l'unité centrale de commande 3. La communication peut être unidirectionnelle depuis le capteur domotique, ou bidirectionnelle. La communication peut être filaire ou sans fil, notamment par ondes électromagnétiques, par exemple par ondes radioélectriques.

L'au moins un actionneur domotique 2 ou l'au moins un dispositif d'alarme peut être appairé à l'unité centrale de commande 3. Ainsi, l'unité centrale de commande 3 peut communiquer avec l'au moins un actionneur domotique 2 ou l'au moins un dispositif d'alarme. La communication peut être unidirectionnelle depuis l'unité centrale de commande 3, ou bidirectionnelle. La communication peut être filaire ou sans fil, notamment par ondes électromagnétiques, par exemple par ondes radioélectriques.

L'au moins un actionneur domotique 2 ou l'au moins un dispositif d'alarme peut être appairé à la télécommande 5. Ainsi, la télécommande 5 peut communiquer avec l'au moins un actionneur domotique 2 ou l'au moins un dispositif d'alarme. La communication peut être unidirectionnelle depuis la télécommande 5, ou bidirectionnelle. La communication peut être filaire ou sans fil, notamment par ondes électromagnétiques, par exemple par ondes radioélectriques.

Dans le mode de réalisation représenté, le capteur domotique 1 comprend :
- un élément sensible 11 à une grandeur physique à mesurer ou à détecter ;
- un calculateur 12, comme un microprocesseur,
- un support 13 d'enregistrement de données, notamment une mémoire 13,
- un élément de communication 14 comprenant un élément d'émission de données ou signaux 141 et éventuellement un élément de réception de données ou signaux 142.

Ainsi, le capteur domotique peut inclure un automatisme, c'est-à-dire qu'il peut inclure une logique de traitement d'une grandeur physique qu'il a mesurée ou qu'il a détecté. Cette logique de traitement ou cet automatisme permet de générer un ordre de commande de l'actionneur domotique ou du système d'alarme en conséquence de la valeur de la grandeur physique qu'il a mesuré ou qu'il a détecté.

Selon une variante, le capteur domotique peut comprendre plusieurs éléments sensibles, chacun étant sensible à une grandeur physique à mesurer ou à détecter. Le calculateur 12 peut être commun pour l'ensemble de ces éléments sensibles. Il est capable de différencier les données fournies par les différents éléments sensibles. Le capteur domotique est alors considéré comme un multi-capteur.

Le capteur domotique peut également comprendre une interface homme-machine 15, notamment un bouton ou un potentiomètre. L'interface peut être utilisée pour configurer le capteur domotique.

L'élément sensible 11 permet par exemple de générer un signal électrique représentatif de la valeur mesurée ou détectée de la grandeur physique. Ce signal électrique est transmis au calculateur. Comme vu précédemment, la grandeur physique caractérise par exemple l'environnement (par exemple la température, le vent, l'humidité, l'ensoleillement, la luminosité, la pression atmosphérique, la présence de pluie ou la présence/concentration de gaz/polluants). La grandeur peut concerner l'environnement intérieur du bâtiment ou l'environnement extérieur du bâtiment. La grandeur physique peut aussi être relative à la présence de personnes ou d'animaux à l'intérieur du bâtiment et/ou à l'environnement extérieur du bâtiment. La grandeur physique peut aussi être relative à l'état d'un équipement domotique.

Le calculateur traite le signal électrique représentatif de la valeur mesurée ou détectée de la grandeur physique et génère en conséquence un signal à émettre.

Selon la configuration du capteur domotique, le calculateur génère soit un signal à émettre comprenant un ordre de commande de l'actionneur 2 ou du dispositif d'alarme, soit un signal à émettre comprenant la valeur mesurée ou détectée de la grandeur physique.

Le signal ainsi généré est transmis par l'élément d'émission de données ou signaux 141 de l'élément de communication 14. Le signal est transmis à un ou plusieurs autres éléments de l'installation domotique, notamment à l'actionneur 2 et/ ou à l'unité centrale de commande 3.

L'installation domotique, notamment le capteur domotique, comprend les éléments, notamment le calculateur et la mémoire, permettant de régir l'exécution des procédés objets de l'invention, notamment les éléments permettant de régir l'exécution des étapes des procédés objets de l'invention. Ces éléments peuvent comprendre des éléments matériels 11, 12, 13, 14, 15 et/ou logiciels. Ces éléments peuvent comprendre des modules logiciels.

Le support 13 d'enregistrement de données est lisible par le calculateur 12. Un programme informatique comprenant des instructions de code de programme de mise en œuvre des étapes des procédés objets de l'invention, est enregistré sur le support 13 d'enregistrement de données.

L'invention porte aussi sur un produit programme d'ordinateur téléchargeable depuis un réseau de communication et/ou enregistré sur le support 13 d'enregistrement de données lisible par le calculateur 12 et/ou exécutable par le calculateur 12. Le produit programme comprend des instructions de code de programme de mise en œuvre des étapes des procédés objets de l'invention, lorsque le programme est exécuté par le calculateur 12.

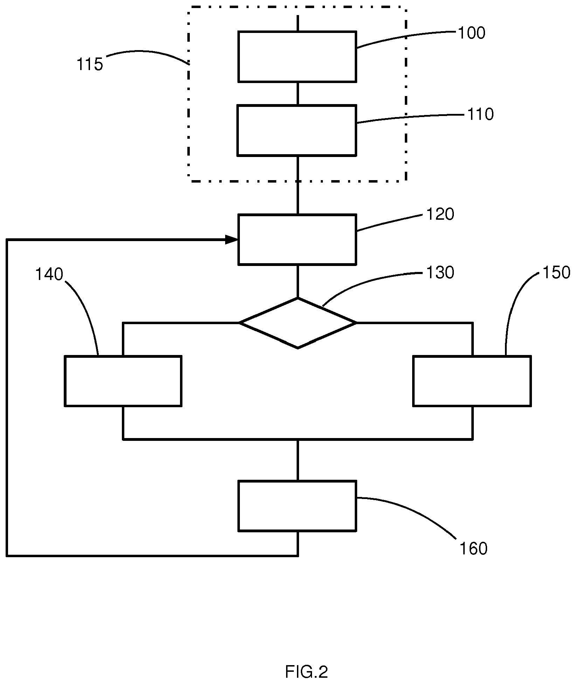

Un mode d'exécution d'un procédé de fonctionnement du capteur domotique est décrit ci-après en référence à la figure 2.

Dans une première étape 115, on configure le capteur domotique. Cette étape de configuration est décrite plus bas.

Puis, dans une deuxième étape 120, on mesure ou on détecte une grandeur physique. Cette étape est réalisée notamment par l'élément sensible 11. Dans cette étape, l'élément sensible 11 génère par exemple un signal électrique représentatif de la valeur mesurée ou détectée de la grandeur physique. Ce signal électrique est transmis au calculateur.

Puis, dans une troisième étape 130, on teste le mode de fonctionnement du capteur domotique. Notamment, on détermine dans cette étape si le capteur fonctionne selon un premier mode ou selon un deuxième mode. Ceci est par exemple déterminé par une information stockée dans la mémoire 13. Cette information a, par exemple, été stockée en mémoire lors de la première étape 115. Si le capteur domotique fonctionne selon le premier mode, on passe à une étape 140. Si le capteur domotique fonctionne selon le deuxième mode, on passe à une deuxième étape 150.

Dans l'étape 140, un automatisme ou une logique de traitement est appliqué au signal de grandeur physique mesurée ou détectée. Ceci est par exemple mis en œuvre par le microprocesseur 12. La logique de traitement permet au capteur, notamment au microprocesseur de générer un premier signal à émettre qui contient un ordre de commande d'un équipement domotique en conséquence de la valeur de la grandeur physique ou du signal électrique représentatif de la valeur mesurée ou détectée de la grandeur physique qui a été généré par l'élément sensible 11. Par exemple, de manière simple, l'ordre de commande de l'équipement domotique peut être généré lorsque la valeur mesurée ou détectée de la grandeur physique dépasse un seuil donné.

Alternativement à l'étape 140, dans l'étape 150, le capteur domotique, notamment le microprocesseur génère un deuxième signal à émettre qui contient une information de valeur de la grandeur physique mesurée ou détectée par l'élément sensible 11 ou la valeur de la grandeur physique mesurée ou détectée par l'élément sensible 11.

Puis, dans une étape 160, le capteur domotique émet, notamment via l'élément d'émission de données ou de signaux 141 de l'élément de communication 14, le premier signal généré lors de l'étape 140 ou le deuxième signal généré lors de l'étape 150. L'information est alors traitée par une entité réceptrice du signal, telle qu'une unité de commande externe au capteur domotique.

Suite à l'étape 160, on boucle sur l'étape 120.

En cas de reconfiguration nécessaire du capteur domotique, on boucle sur l'étape 115.

Un mode d'exécution de l'étape 115 ou d'un procédé de configuration du capteur domotique est décrit ci-après en référence à la figure 2.

Dans une première étape 100 de configuration, on sélectionne au moins un mode de fonctionnement du capteur domotique parmi :
- au moins le premier mode de fonctionnement du capteur domotique dans lequel le capteur émet un signal comprenant un ordre de commande déterminé sur la base de la grandeur physique mesurée ou détectée, et
- au moins le deuxième mode de fonctionnement du capteur domotique dans lequel le capteur émet un signal représentatif d'une grandeur physique mesurée ou détectée ou comprenant une information représentative de la valeur de la grandeur physique mesurée ou détectée.

Puis dans une deuxième étape 110 de configuration, on active l'au moins un mode de fonctionnement sélectionné lors de l'étape précédente. Ceci est par exemple réalisé en enregistrant en mémoire une information, notamment un indicateur, définissant le mode de fonctionnement du capteur domotique. Cette information détermine le comportement du capteur domotique, notamment le comportement du calculateur.

Selon une première variante de réalisation, l'étape de sélection peut être déclenchée par une action d'un utilisateur sur le capteur domotique, notamment sur l'interface homme-machine, en particulier sur un bouton 15 ou sur une touche du capteur domotique et/ou l'étape d'activation peut être déclenchée par une action d'un utilisateur sur le capteur domotique, notamment sur l'interface homme-machine, en particulier sur un bouton 15 ou sur une touche du capteur domotique. Par exemple, une première ergonomie d'actions sur l'interface homme-machine permet de placer le capteur domotique dans le premier mode de fonctionnement et une deuxième ergonomie d'actions sur l'interface homme-machine permet de placer le capteur domotique dans le deuxième mode de fonctionnement.

Selon une deuxième variante de réalisation, l'étape de sélection peut être déclenchée par la réception d'un signal de configuration par le capteur domotique et/ou l'étape d'activation peut être déclenchée par la réception d'un signal de configuration par le capteur domotique. Ceci nécessite que le capteur domotique comprenne un élément de réception de données ou signaux 142. Dans ce cas, un autre équipement de l'installation, notamment la télécommande ou l'unité centrale de commande peut émettre le signal de configuration déclenchant alors automatiquement au niveau du capteur domotique la sélection du mode de fonctionnement et l'activation du mode de fonctionnement sélectionné. Dans cette deuxième variante, le signal de configuration peut être envoyé par l'unité centrale de commande et contenir un ordre explicite ou implicite de configuration selon le deuxième mode de fonctionnement. Le signal de configuration peut comprendre un ou plusieurs critères d'envoi des données que le capteur doit respecter par la suite. Ces critères sont propres d'une part à la grandeur physique mesurée ou détectée par le capteur domotique et d'autre part propres aux besoins que peut avoir l'unité centrale de commande. Le signal de configuration peut donc être déclenché par une évolution de l'installation domotique vers des fonctions domotiques plus évoluées. De préférence, le capteur domotique est par défaut configuré selon le premier mode de fonctionnement dans lequel il émet systématiquement des signaux contenant des ordres de commande. De préférence encore, le premier mode de fonctionnement est désactivé dès que le deuxième mode est sélectionné et/ou activé.

Selon une troisième variante de réalisation, on réalise préalablement à l'étape de sélection un appairage du capteur domotique à au moins un autre équipement domotique 2 ; 3. Lors de cet appairage, le capteur domotique peut être informé de la nature de l'autre équipement domotique, c'est-à-dire si l'autre équipement inclut ou non un automatisme ou de manière plus générale, comment l'autre équipement est capable de traiter les informations. Le capteur domotique connaissant cette nature peut automatiquement déterminer le besoin que cet autre équipement domotique a en matière de données à recevoir du capteur. Dès lors, l'étape de sélection peut être déclenchée automatiquement selon la nature de l'équipement domotique appairé et/ou l'étape d'activation peut être déclenchée automatiquement selon la nature de l'équipement domotique appairé.

Par exemple, lors de l'appairage d'un nouvel équipement domotique au capteur domotique, on informe le capteur domotique de :
- la capacité du nouvel équipement domotique à traiter un signal représentatif de la grandeur physique mesurée ou détectée par le capteur domotique ; ou
- le besoin du nouvel équipement domotique de recevoir un ordre de commande déterminé sur la base de la grandeur physique mesurée ou détectée.

Cette information peut être directement et automatiquement fournie au capteur domotique par le nouvel équipement domotique au cours de la procédure d'appairage. Elle peut être également fournie par un utilisateur ou un installateur avant, pendant ou après la procédure d'appairage, par exemple par action sur l'interface homme-machine 15.

Dans le cas où le capteur domotique est informé que le nouvel équipement domotique a besoin de recevoir un ordre de commande déterminé sur la base de la grandeur physique mesurée ou détectée, le premier mode de fonctionnement du capteur domotique est automatiquement sélectionné et activé.

Dans le cas où le capteur domotique est informé que le nouvel équipement domotique est capable de traiter un signal représentatif de la grandeur physique mesurée ou détectée par le capteur domotique, le deuxième mode de fonctionnement du capteur domotique est automatiquement sélectionné et activé. Toutefois, dans cette situation, d'autres paramètres que la capacité du nouvel équipement domotique à traiter un signal représentatif de la grandeur physique mesurée ou détectée peuvent être pris en compte. Notamment des critères de sécurité peuvent être pris en compte. Ainsi, s'il apparaît important que l'ordre de commande doit être généré au niveau du capteur domotique, le premier mode de fonctionnement du capteur domotique peut être automatiquement sélectionné et activé bien que le nouvel équipement domotique soit capable de traiter un signal représentatif de la grandeur physique mesurée ou détectée par le capteur domotique.

Dans le mode de réalisation décrit, le premier mode de fonctionnement du capteur domotique et le deuxième mode de fonctionnement du capteur domotique sont exclusifs l'un de l'autre. Ainsi, au moins entre deux configurations successives du capteur domotique, ce dernier ne fonctionne que selon l'un ou l'autre des premier et deuxième modes.

En alternative, au mode de réalisation décrit, le capteur domotique peut être configuré selon un troisième mode de fonctionnement dans lequel les étapes 140 et 150 décrites plus haut sont toutes les deux mises en œuvre, notamment en parallèle, et, à l'issue de ces étapes, les premier et deuxième signaux générés sont émis par le capteur. Ce troisième mode de fonctionnement peut être applicable à un capteur domotique sous forme d'un multi-capteur, par exemple un capteur « vent-soleil », capable de mesurer ou détecter différentes grandeurs physiques. L'étape 140 s'applique alors à une partie des données mesurées ou détectées, par exemple aux données concernant une première grandeur physique comme le vent, tandis que l'étape 150 s'applique à l'autre partie des données mesurées ou détectées, par exemple aux données concernant une deuxième grandeur physique comme l'ensoleillement. Certains équipements domotiques peuvent alors recevoir les deux messages et utiliser l'un et/ou l'autre des deux signaux. En complément encore, dans un quatrième mode de fonctionnement, lors de l'étape 160, le capteur domotique peut envoyer sélectivement, à certains équipements domotiques, le premier signal généré dans l'étape 140 et, à d'autres équipements domotiques, le deuxième signal généré dans l'étape 150.

Grâce aux procédés décrits précédemment et au capteur domotique décrit précédemment, le capteur adapte son comportement suivant l'environnement constitué par l'installation dans laquelle il se trouve et/ou suivant le type de lien fonctionnel qu'il a avec les autres équipements de l'installation. Ainsi, un seul capteur permet de constituer un système avec un automatisme de base puis de suivre l'évolution du niveau fonctionnel du système, sous certaines conditions, sans nécessité de changement de capteur.

Comme vu précédemment, grâce aux procédés décrits précédemment et au capteur domotique décrit précédemment, le capteur domotique peut être utilisé dans les deux situations qui suivent :
- situation où la logique de traitement est embarquée dans le capteur. Le capteur contient l'automatisme et envoie des ordres de commande à un équipement domotique commandé. L'installation domotique peut demeurer simple. Dans cette situation, le capteur effectue les mesures de chaque grandeur physique et décide de l'action à effectuer sur l'équipement domotique commandé. Il envoie les ordres de commande adéquats pour placer l'équipement domotique commandé dans l'état convenant. Le capteur tient compte de l'état de toutes les grandeurs physiques pour déterminer les ordres de commande. La commande de l'équipement domotique est gérée intégralement par le capteur domotique.
- situation où la logique de traitement est embarquée dans une unité de commande externe au capteur. Le capteur envoie des informations de valeurs mesurées à l'unité de commande qui contient l'automatisme et envoie des ordres adaptés à l'équipement domotique commandé. Dans cette situation, le capteur domotique effectue les mesures de chaque grandeur physique et les envoie à l'unité de commande. L'unité de commande décide des actions à effectuer au niveau de l'équipement domotique commandé en fonction des mesures reçues du ou des capteurs auxquels elle est appairée.

Certaines limites peuvent être imposées à la configuration du capteur domotique, notamment lorsque celle-ci a lieu de manière automatique.

En effet, si le capteur domotique participe à une fonction de sécurité, comme par exemple un capteur de vent, il doit, en cas de requête de passage au deuxième mode de fonctionnement:
- continuer à fonctionner selon son premier mode de fonctionnement, et
- éventuellement, envoyer également les signaux qu'il émet à l'unité de commande. Cet envoi peut être fait de manière ciblée, le signal étant spécifiquement adressé à l'unité de commande (suite à un appairage préalable entre le capteur domotique et l'unité de commande) ou par diffusion à l'ensemble de l'installation domotique.

Ainsi, le premier mode de fonctionnement est prioritaire dans un capteur domotique assurant une fonction de sécurité.

Si le capteur domotique participe à une fonction de confort, comme par exemple un capteur d'ensoleillement, il doit, en cas de requête de passage au deuxième mode de fonctionnement:
- passer au fonctionnement selon le deuxième mode, et
- envoyer les signaux qu'il émet à l'unité de commande. Cet envoi peut être fait de manière ciblée, le signal étant spécifiquement adressé à l'unité de commande (suite à un appairage préalable entre le capteur domotique et l'unité de commande) ou par diffusion à l'ensemble de l'installation domotique.

Si besoin, le capteur domotique informe les équipements domotiques qui lui sont rattachés qu'il modifie son mode de fonctionnement. Par exemple le capteur peut informer un actionneur ou une unité de commande qu'il rompt un lien fonctionnel avec celui ou celle-ci, le lien fonctionnel étant par exemple une information régulière de bon fonctionnement. Ceci permet d'éviter que l'actionneur ou l'unité de commande ne considère le capteur domotique en panne dans la mesure où l'information régulière de bon fonctionnement n'est plus émise ni reçue lorsque le capteur est dans le deuxième mode de fonctionnement du capteur.

Ainsi, le deuxième mode de fonctionnement est prioritaire dans un capteur domotique assurant une fonction de confort.

Dans l'installation domotique décrite, l'automatisme qui traite la valeur de grandeur physique mesurée ou détectée doit pouvoir demander à un équipement domotique de rejoindre une configuration donnée. Il peut agir sur différents degrés de liberté de l'équipement domotique, comme notamment:
- la position du tablier d'un volet roulant ou la position de déploiement de la toile d'un store,
- l'orientation des lames d'un store vénitien,
- l'intensité lumineuse d'un dispositif d'éclairage,
- la vitesse de déplacement d'un équipement domotique mobile, tel qu'un store ou un volet : lente, par défaut, rapide.

L'ordre de commande fourni par l'automatisme peut comprendre :
- une position de l'équipement domotique programmée par l'utilisateur / préférée par l'utilisateur,
- une position absolue de l'équipement domotique,
- un petit déplacement relatif de l'équipement domotique,
- une position antérieure lors de la détection d'un évènement antérieur.

Par ailleurs, les ordres de commande fournis par un automatisme doivent pouvoir être séquencés pour mettre l'équipement domotique dans des configurations successives avec des temporisations entre ces configurations.

Par exemple, un automatisme peut, suite à une détection de fin de pluie, ordonner à un store banne de se déployer, de rester déployé un certain temps, puis de s'enrouler de nouveau. Ceci permet par exemple de faire sécher la toile du store. Un automatisme peut encore ordonner à une fenêtre de s'ouvrir, puis de se fermer au bout d'un certain temps, dans le but d'assurer une ventilation.

Un automatisme doit encore pouvoir limiter les mouvements d'une application. Par exemple, il peut interdire les mouvements dans une direction, l'autre direction étant libre (comme empêcher le déroulement d'un écran à la descente, en cas de vent).

Un automatisme doit aussi pouvoir bloquer une application de tout pilotage déclenché par l'unité de commande ou par un capteur. La position de cette dernière n'est alors plus modifiable pendant un certain temps dépendant de la situation et du type d'automatisme. Par exemple, un automatisme vent peut bloquer pour plusieurs minutes tout mouvement d'un store replié dès qu'il détecte du vent ou un automatisme peut bloquer de nouvelles configurations d'un équipement domotique si un ordre manuel, fourni par un utilisateur, a été reçu par l'équipement dans un délai prédéfini.

Un automatisme doit enfin pouvoir confirmer une action préalablement lancée de façon périodique.

Dans tout ce document, par « signal représentatif d'une grandeur physique », on entend de préférence un signal représentatif de la valeur de la grandeur physique.

## Revendications

1. Procédé de configuration d'un capteur domotique (1) comprenant un élément sensible (11) à une grandeur physique à mesurer ou à détecter, un calculateur (12), comme un microprocesseur, un support (13) d'enregistrement de données, notamment une mémoire, un élément de communication (14) comprenant un élément d'émission de données ou signaux (141), le procédé comprenant :
- une étape (100) de sélection d'au moins un mode de fonctionnement du capteur domotique parmi au moins un premier mode de fonctionnement du capteur domotique dans lequel le capteur domotique émet un premier ordre de commande déterminé sur la base d'une première grandeur physique mesurée ou détectée et au moins un deuxième mode de fonctionnement du capteur domotique dans lequel le capteur domotique émet un premier signal représentatif de la première grandeur physique mesurée ou détectée,
- une étape (110) d'activation de l'au moins un mode de fonctionnement sélectionné lors de l'étape précédente.

2. Procédé de configuration selon la revendication précédente, **caractérisé en ce que** l'étape de sélection est déclenchée par une action d'un utilisateur sur le capteur domotique, notamment sur une interface homme-machine (15) comme un bouton ou une touche ou un potentiomètre du capteur domotique, et/ou l'étape d'activation est déclenchée par une action d'un utilisateur sur le capteur domotique, notamment sur une interface homme-machine (15) comme un bouton ou une touche ou un potentiomètre du capteur domotique.

3. Procédé de configuration selon la revendication 1 ou 2, **caractérisé en ce que** l'étape de sélection est déclenchée par la réception d'un signal de configuration par le capteur domotique et/ou l'étape d'activation est déclenchée par la réception d'un signal de configuration par le capteur domotique.

4. Procédé de configuration selon la revendication 1 à 3, **caractérisé en ce qu'**il comprend une étape d'appairage du capteur domotique à au moins un équipement domotique (2 ; 3) et **en ce que** l'étape de sélection est déclenchée automatiquement selon la nature de l'au moins un équipement domotique appairé et/ou l'étape d'activation est déclenchée automatiquement selon la nature de l'au moins un équipement domotique appairé.

5. Procédé de configuration selon l'une des revendications précédentes, **caractérisé en ce que** le premier mode de fonctionnement du capteur domotique et le deuxième mode de fonctionnement du capteur domotique sont exclusifs l'un de l'autre.

6. Procédé de configuration selon l'une des revendications 1 à 5, **caractérisé en ce que** l'au moins un mode de fonctionnement sélectionné est en outre tel que le capteur domotique émet un deuxième ordre de commande déterminé sur la base d'une deuxième grandeur physique mesurée ou détectée, la deuxième grandeur physique étant distincte de la première grandeur physique, ou tel que le capteur domotique émet un deuxième signal représentatif de la deuxième grandeur physique mesurée ou détectée, la deuxième grandeur physique étant distincte de la première grandeur physique.

7. Procédé de fonctionnement d'un capteur domotique, le procédé de fonctionnement comprenant :
- une étape (115) de configuration mettant en œuvre le procédé de configuration selon l'une des revendications précédentes,
- une étape (120) de mesure ou de détection d'une première grandeur physique,
- une étape (150, 160) d'émission d'un premier signal représentatif de la première grandeur physique mesurée ou détectée lors de l'étape précédente et/ou une étape (140, 160) d'émission d'un premier ordre de commande sur la base de la première grandeur physique mesurée ou détectée lors de l'étape précédente.

8. Capteur domotique (1) comprenant des éléments matériels (11, 12, 13, 14, 15) et/ou logiciels mettant en œuvre le procédé selon l'une des revendications précédentes, notamment des éléments matériels (11, 12, 13, 14, 15) et/ou logiciels conçus pour mettre en œuvre le procédé selon l'une des revendications précédentes ou capteur domotique (1) comprenant des moyens (11, 12, 13, 14, 15) de mettre en œuvre le procédé selon l'une des revendications précédentes.

9. Installation domotique (4) comprenant au moins un capteur domotique (1) selon la revendication précédente et au moins un actionneur domotique (2) ou au moins un dispositif d'alarme domotique.

10. Support (13) d'enregistrement de données, lisible par un calculateur (12), sur lequel est enregistré un programme informatique comprenant des instructions de code de programme de mise en œuvre du procédé selon l'une quelconque des revendications 1 à 7 ou support (13) d'enregistrement lisible par calculateur comprenant des instructions qui, lorsqu'elles sont exécutées par un calculateur, conduisent celui-ci à mettre en œuvre le procédé selon l'une quelconque des revendications 1 à 7.

11. Produit programme d'ordinateur téléchargeable depuis un réseau de communication et/ou enregistré sur un support (13) d'enregistrement de données lisible par un calculateur (12) et/ou exécutable par un calculateur (12), **caractérisé en ce qu'**il comprend des instructions de code de programme de mise en œuvre du procédé selon l'une quelconque des revendications 1 à 7, lorsque le programme est exécuté par un calculateur (12), ou produit programme d'ordinateur téléchargeable depuis un réseau de communication et/ou enregistré sur un support de données (13) lisible par un calculateur (12) et/ou exécutable par un calculateur (12), caractérisé en ce **en ce qu'**il comprend des instructions qui, lorsque le programme est exécuté par un ordinateur, conduisent celui-ci à mettre en œuvre le procédé selon l'une quelconque des revendications 1 à 7.

12. Signal d'un support de données, portant le produit programme d'ordinateur selon la revendication 11.

## Patentansprüche

1. Verfahren zur Konfiguration eines Haustechniksensors (1), der ein auf eine zu messende oder zu erfassende physikalische Größe ansprechendes Element (11), einen Rechner (12), wie einen Mikroprozessor, einen Datenaufzeichnungsträger (13), insbesondere einen Speicher, und ein Kommunikationselement (14) enthält, das ein Daten- oder Signalsendeelement (141) enthält, wobei das Verfahren enthält:
- einen Schritt (100) der Auswahl mindestens einer Betriebsart des Haustechniksensors unter mindestens einer ersten Betriebsart des Haustechniksensors, in der der Haustechniksensor einen ersten Steuerbefehl sendet, der auf der Basis einer ersten gemessenen oder erfassten physikalischen Größe bestimmt wird, und mindestens einer zweiten Betriebsart des Haustechniksensors, in der der Haustechniksensor ein erstes Signal sendet, das für die erste gemessene oder erfasste physikalische Größe repräsentativ ist,
- einen Schritt (110) der Aktivierung der im vorhergehenden Schritt ausgewählten mindestens einen Betriebsart.

2. Konfigurationsverfahren nach dem vorhergehenden Anspruch, **dadurch gekennzeichnet, dass** der Auswahlschritt durch eine Einwirkung eines Benutzers auf den Haustechniksensor ausgelöst wird, insbesondere auf eine Mensch-Maschine-Schnittstelle (15), wie einen Knopf oder eine Taste oder ein Potentiometer des Haustechniksensors, und/oder der Aktivierungsschritt durch eine Einwirkung eines Benutzers auf den Haustechniksensor ausgelöst wird, insbesondere auf eine Mensch-Maschine-Schnittstelle (15), wie einen Knopf oder eine Taste oder ein Potentiometer des Haustechniksensors.

3. Konfigurationsverfahren nach Anspruch 1 oder 2, **dadurch gekennzeichnet, dass** der Auswahlschritt durch den Empfang eines Konfigurationssignals durch den Haustechniksensor ausgelöst wird und/oder der Aktivierungsschritt durch den Empfang eines Konfigurationssignals durch den Haustechniksensor ausgelöst wird.

4. Konfigurationsverfahren nach Anspruch 1 bis 3, **dadurch gekennzeichnet, dass** es einen Schritt der paarweisen Zuordnung des Haustechniksensors zu mindestens einem Haustechnikgerät (2; 3) enthält, und dass der Auswahlschritt je nach der Beschaffenheit des mindestens einen paarweise zugeordneten Haustechnikgeräts ausgelöst wird und/oder der Aktivierungsschritt automatisch gemäß der Beschaffenheit des mindestens einen paarweise zugeordneten Haustechnikgeräts ausgelöst wird.

5. Konfigurationsverfahren nach einem der vorhergehenden Ansprüche, **dadurch gekennzeichnet, dass** die erste Betriebsart des Haustechniksensors und die zweite Betriebsart des Haustechniksensors sich gegenseitig ausschließen.

6. Konfigurationsverfahren nach einem der Ansprüche 1 bis 5, **dadurch gekennzeichnet, dass** die mindestens eine ausgewählte Betriebsart außerdem so ist, dass der Haustechniksensor einen zweiten Steuerbefehl bestimmt auf der Basis einer gemessenen oder erfassten zweiten physikalischen Größe sendet, wobei die zweite physikalische Größe sich von der ersten physikalischen Größe unterscheidet, oder so ist, dass der Haustechniksensor ein zweites Signal sendet, das für die gemessene oder erfasste zweite physikalische Größe repräsentativ ist, wobei die zweite physikalische sich von der ersten physikalischen Größe unterscheidet.

7. Betriebsverfahren eines Haustechniksensors, wobei das Betriebsverfahren enthält:
- einen Konfigurationsschritt (115), der das Konfigurationsverfahren nach einem der vorhergehenden Ansprüche durchführt,
- einen Mess- oder Erfassungsschritt (120) einer ersten physikalischen Größe,
- einen Sendeschritt (150, 160) eines ersten Signals, das für die im vorhergehenden Schritt gemessene oder erfasste erste physikalische Größe repräsentativ ist, und/oder einen Sendeschritt (140, 160) eines ersten Steuerbefehls auf der Basis der im vorhergehenden Schritt gemessenen oder erfassten ersten physikalischen Größe.

8. Haustechniksensor (1), der Hardware- (11, 12, 13, 14, 15) und/oder Softwareelemente enthält, die das Verfahren nach einem der vorhergehenden Ansprüche durchführen, insbesondere Hardware- (11, 12, 13, 14, 15) und/oder Softwareelemente, die konzipiert sind, um das Verfahren nach einem der vorhergehenden Ansprüche durchzuführen, oder Haustechniksensor (1), der Einrichtungen (11, 12, 13, 14, 15) enthält, um das Verfahren nach einem der vorhergehenden Ansprüche durchzuführen.

9. Haustechnikanlage (4), die mindestens einen Haustechniksensor (1) nach dem vorhergehenden Anspruch und mindestens einen Haustechnik-Stellantrieb (2) oder mindestens eine Haustechnik-Alarmvorrichtung enthält.

10. Datenaufzeichnungsträger (13), der für einen Rechner (12) lesbar ist, auf dem ein EDV-Programm aufgezeichnet ist, das Programmcodeanweisungen zur Durchführung des Verfahrens nach einem der Ansprüche 1 bis 7 enthält, oder rechnerlesbarer Speicherträger (13), der Anweisungen enthält, die, wenn sie von einem Rechner ausgeführt werden, diesen veranlassen, das Verfahren nach einem der Ansprüche 1 bis 7 durchzuführen.

11. Computerprogrammprodukt, das von einem Kommunikationsnetzwerk heruntergeladen werden kann und/oder auf einem Datenaufzeichnungsträger (13) aufgezeichnet ist, der von einem Rechner (12) gelesen werden kann, und/oder von einem Rechner (12) ausgeführt werden kann, **dadurch gekennzeichnet, dass** es Programmcodeanweisungen zur Durchführung des Verfahrens nach einem der Ansprüche 1 bis 7 enthält, wenn das Programm von einem Rechner (12) ausgeführt wird, oder von einem Kommunikationsnetzwerk herunterladbares und/oder auf einem Datenträger (13), der von einem Rechner (12) lesbar ist, aufgezeichnetes und/oder von einem Rechner (12) ausführbares Computerprogrammprodukt, **dadurch gekennzeichnet, dass** es Anweisungen enthält, die, wenn das Programm von einem Computer ausgeführt wird, diesen veranlassen, das Verfahren nach einem der Ansprüche 1 bis 7 durchzuführen.

12. Signal eines Datenträgers, das das Computerprogrammprodukt nach Anspruch 11 trägt.

## Claims

1. Method for configuring a home-automation sensor (1) comprising an element (11) sensitive to a physical quantity to be measured or to be detected, a computer (12), such as a microprocessor, a data storage medium (13), notably a memory, a communication element (14) comprising a data or signal transmission element (141), the method comprising:
- a step (100) of selection of at least one mode of operation of the home-automation sensor out of at least one first mode of operation of the home-automation sensor in which the home-automation sensor transmits a first control command determined on the basis of a first physical quantity measured or detected and at least one second mode of operation of the home-automation sensor in which the home-automation sensor transmits a first signal representative of the first physical quantity measured or detected,
- a step (110) of activation of the at least one mode of operation selected in the preceding step.

2. Configuration method according to the preceding claim, **characterized in that** the selection step is triggered by an action of a user on the home-automation sensor, notably on a human-machine interface (15) such as a button or a key or a potentiometer of the home-automation sensor, and/or the activation step is triggered by an action of a user on the home-automation sensor, notably on a human-machine interface (15) such as a button or a key or a potentiometer of the home-automation sensor.

3. Configuration method according to Claim 1 or 2, **characterized in that** the selection step is triggered by the reception of a configuration signal by the home-automation sensor and/or the activation step is triggered by the reception of a configuration signal by the home-automation sensor.

4. Configuration method according to Claims 1 to 3, **characterized in that** it comprises a step of pairing of the home-automation sensor with at least one home-automation equipment item (2; 3) and **in that** the selection step is triggered automatically according to the nature of the at least one paired home-automation equipment item and/or the activation step is triggered automatically according to the nature of the at least one paired home-automation equipment item.

5. Configuration method according to one of the preceding claims, **characterized in that** the first mode of operation of the home-automation sensor and the second mode of operation of the home-automation sensor are mutually exclusive.

6. Configuration method according to one of Claims 1 to 5, **characterized in that** the at least one selected mode of operation is also such that the home-automation sensor transmits a second control command determined on the basis of a second physical quantity measured or detected, the second physical quantity being distinct from the first physical quantity, or such that the home-automation sensor transmits a second signal representative of the second physical quantity measured or detected, the second physical quantity being distinct from the first physical quantity.

7. Method for operating a home-automation sensor, the operating method comprising:
- a configuration step (115) implementing the configuration method according to one of the preceding claims,
- a step (120) of measurement or of detection of a first physical quantity,
- a step (150, 160) of transmission of a first signal representative of the first physical quantity measured or detected in the preceding step and/or a step (140, 160) of transmission of a first control command on the basis of the first physical quantity measured or detected in the preceding step.

8. Home-automation sensor (1) comprising hardware elements (11, 12, 13, 14, 15) and/or software implementing the method according to one of the preceding claims, notably hardware elements (11, 12, 13, 14, 15) and/or software designed to implement the method according to one of the preceding claims or home-automation sensor (1) comprising means (11, 12, 13, 14, 15) for implementing the method according to one of the preceding claims.

9. Home-automation installation (4) comprising at least one home-automation sensor (1) according to the preceding claim, and at least one home-automation actuator (2) or at least one home-automation alarm device.

10. Data storage medium (13), that can be read by a computer (12), on which is stored a computer program comprising program code instructions for implementing the method according to any one of Claims 1 to 7 or computer-readable storage medium (13) comprising instructions which, when they are executed by a computer, cause the latter to implement the method according to any one of Claims 1 to 7.

11. Computer program product that can be downloaded from a communication network and/or stored on a data storage medium (13) that can be read by a computer (12) and/or that can be executed by a computer (12), **characterized in that** it comprises program code instructions for implementing the method according to any one of Claims 1 to 7, when the program is executed by a computer (12), or computer program product that can be downloaded from a communication network and/or stored on a data medium (13) that can be read by a computer (12) and/or that can be executed by a computer (12), **characterized in that** it comprises instructions which, when the program is run by a computer, cause the latter to implement the method according to any of Claims 1 to 7.

12. Signal from a data medium, carrying the computer program product according to Claim 11.
